# EUROPÄISCHE PATENTSCHRIFT

(11) **EP 1 066 167 B1**
(45) Veröffentlichungstag und Bekanntmachung des Hinweises auf die Patenterteilung: **04.02.2004**
(21) Anmeldenummer: 98917078.2
(22) Anmeldetag: 25.03.1998
(51) Int. Cl.: B60J 10/04, B60J 10/00

(54) **DICHTUNGSPROFIL FÜR KRAFTFAHRZEUGE**
SEALING PROFILE FOR MOTOR VEHICLES
PROFILE D'ETANCHEITE DESTINE A DES VEHICULES

(43) Veröffentlichungstag der Anmeldung: 10.01.2001
(73) Patentinhaber: Metzeler Automotive Profile Systems GmbH, 88131 Lindau/Bodensee (DE)
(72) Erfinder: BERKEMEIER, Frank, D-88131 Lindau (DE); KRAUSE, Fritz, D-88239 Wangen (DE)
(74) Vertreter: Preissner, Nicolaus, Dipl.-Ing.
(86) Internationale Anmeldenummer: PCT/EP1998/001754
(87) Internationale Veröffentlichungsnummer: WO 1999/048714

(56) Entgegenhaltungen:
- EP-A- 0 404 614
- EP-A- 0 507 231
- DE-A- 3 106 909
- FR-A- 2 689 457
- FR-A- 2 696 376
- GB-A- 2 194 926

## Beschreibung

Die vorliegende Erfindung betrifft ein Dichtungsprofil aus elastomerem Material, insbesondere zum Abdichten von Fensterschächten für Seitenscheiben in Türen von Kraftfahrzeugen mit einem Dichtungsbereich und einem mit diesem verbundenen Befestigungsbereich, wobei der Befestigungsbereich einen im Querschnitt U-förmigen Grundkörper mit einem äußeren Schenkel, einem inneren Schenkel und einem Stegelement sowie ein Verstärkungselement in dem äußeren Schenkel aufweist.

Derartige Dichtungsprofile sind bereits bekannt. In der EP-A-0 386 513 B1 ist ein Dichtungsprofil aus elastomerem Material, insbesondere für bewegliche Scheiben in Kraftfahrzeugen, beschrieben. Das Dichtungsprofil ist in Form eines Profilrahmens ausgebildet, der ein mit einem metallischen Verstärkungselement versehenes U-förmiges Klemmprofil aufweist. Das metallische Verstärkungselement hat dabei ebenfalls einen U-förmigen Querschnitt. Beim Verbauen bzw. der Montage eines derartigen Dichtungsprofils in Fensterschächten von Kraftfahrzeugtüren ist es häufig notwendig, daß Teile des Dichtungsprofils weggeschnitten werden, um unterschiedlichen geometrischen Anforderungen der Kraftfahrzeugtür gerecht zu werden. Insbesondere bei Fahrzeugen mit einer nahezu glatten Außenhaut, die an der B-Säule mit einer Blende versehen ist, ist es erforderlich, daß Teilbereiche des metallischen Verstärkungselements weggeschnitten werden. Die dann freiliegende Schnittfläche des metallischen Verstärkungselements muß in einem zusätzlichen Arbeitsgang erneut durch Vulkanisation versiegelt werden. Hierdurch entsteht prozeßbedingt eine bereichsweise unterschiedliche Oberfläche, was insbesondere aus optischen Gründen unerwünscht ist und auch zu einer Beeinträchtigung der Funktionsweise des Dichtungssystems führen kann.

Ausgehend vom genannten Stand der Technik liegt der vorliegenden Erfindung die Aufgabe zugrunde, ein Dichtungsprofil der genannten Art derart weiterzubilden, daß ein Wegschneiden von Dichtungsprofilteilen und insbesondere von Teilen des Verstärkungselements ohne weitere, sich anschließende Arbeitsschritte möglich ist.

Die Aufgabe wird bei einem Dichtungsprofil der eingangs genannten Art erfindungsgemäß durch die Merkmale des Anspruchs 1 gelöst, wobei in weiteren Ausgestaltungen der Erfindung das Verstärkungselement nur in dem äußeren Schenkel und in einem Teilbereich des Stegelements ausgebildet ist, das elastomere Material im Grundkörper eine größere Shore-A-Härte aufweist als das elastomere Material im übrigen Dichtungsprofil, daß der innere Schenkel mit Vorspannung beaufschlagt ist und der Grundkörper mindestens eine Dichtlippe aufweist, die über einen Verbindungssteg an dem äußeren Schenkel angeordnet ist, wobei die Dichtlippe sich schräg nach innen in einen vom Grundkörper gebildeten Hohlraum erstreckt.

Auf diese Weise kann durch die besondere Ausgestaltung des Verstärkungselements auf ein Schneiden des Verstärkungselements verzichtet werden. Dies ist insbesondere bei Fahrzeugen mit nahezu glatter Aussenhaut, die an der B-Säule mit einer Blende versehen sind, von Vorteil. Bei solchen Fahrzeugen ist es nämlich erforderlich, daß zumindest im Bereich der Blende Teile des Dichtungsprofils weggeschnitten werden müssen. Die wegzuschneidenden Teilbereiche des Dichtungsprofils umfassen sowohl die Dichtlippe als auch den Befestigungsbereich. Das heißt, daß auch Bereiche des U-förmigen Verstärkungselements, das sich sowohl in den beiden Schenkeln als auch im Stegelement des Grundkörpers des Befestigungsbereichs erstreckt, weggeschnitten werden müssen.

Da bei dem erfindungsgemäßen Dichtungsprofil das Verstärkungselement nur in dem äußeren Schenkel und in wenigstens einem Teilbereich des Stegelements des Grundkörpers ausgebildet ist, kann die Länge des im Stegelement befindlichen Teils des Verstärkungselements derart gewählt werden, daß beim Schneiden des Dichtungsprofils das Verstärkungselement nicht mitgeschnitten werden muß und zusätzlich immer ein ausreichend breiter Bereich aus elastomerem Material zwischen dem Ende des Verstärkungselements und der Schnittkante des Dichtungsprofils bestehen bleibt. Eine nachträgliche Vulkanisation des freiliegenden Endes des Verstärkungselements ist demnach hinfällig. Weiterhin weist das Dichtungsprofil auch nach dem Schnittvorgang in allen Bereichen eine gleichmäßige und kontinuierliche Oberfläche auf. Unterschiedliche Oberflächen des Dichtungsprofils an der Schnittkante werden vermieden, wodurch eine einheitliche Optik vorliegt.

In vorteilhafter Ausgestaltung der Erfindung ist das Verstärkungselement L-förmig oder S-förmig ausgebildet. Insbesondere durch die Verwendung eines S-förmigen Verstärkungselements kann dem Dichtungsprofil eine noch größere Steifigkeit verliehen werden.

Vorteilhaft besteht das Verstärkungselement aus Metall und vorzugsweise aus Stahl oder Aluminium. Es ist jedoch auch denkbar, einen nicht-metallischen Werkstoff, beispielsweise einen Kunststoff wie etwa ein Kunstharz als Material für das Verstärkungselement zu verwenden. Ein aus Kunststoff gefertigtes Verstärkungselement hat insbesondere im Hinblick auf die Recyclingfähigkeit des Dichtungsprofils Vorteile. In bevorzugter Ausgestaltung der Erfindung ist der innere Schenkel mit einer Vorspannung beaufschlagt. Diese Vorspannung, die vorteilhaft derart eingestellt ist, daß der innere Schenkel im Normalzustand des Dichtungsprofils zur inneren Oberfläche des äußeren Schenkels hin geneigt ist, sorgt insbesondere für eine Verbesserung des Verhältnisses zwischen der Aufsteckkraft und Abzugskraft für das Dichtungsprofil. Da der Grundkörper des Dichtungsprofils ebenfalls aus elastomerem Material besteht, kann der innere Schenkel beim Einbau des Dichtungsprofils im Fensterschacht auf einfache Weise durch den Montagevorgang nach außen gedrückt werden. Nach dem Einbau des Dichtungsprofils legt sich der innere Schenkel des Grundkörpers auf Grund seiner Vorspannung eng gegen den Türflansch der Kraftfahrzeugtür an, wodurch ein Abziehen des Dichtungsprofils vom Türflansch erschwert wird.

Vorteilhaft weist das elastomere Material im Grundkörper eine größere Shore-A-Härte auf, als das elastomere Material im übrigen Dichtungsprofil. Die Verwendung einer harten Mischung im Grundkörper und damit im Klemmfußbereich des Dichtungsprofils dient ebenfalls dazu, den Sitz des Dichtungsprofils sicherzustellen. Insbesondere ist die Verwendung einer harten Mischung im Klemmbereich des Dichtungsprofils deshalb von Vorteil, weil im inneren Schenkel und zumindest einem daran anschließenden Teilbereich des Stegelements des Grundkörpers kein Verstärkungselement vorgesehen ist.

In bevorzugter Ausgestaltung der Erfindung weist das elastomere Material im Grundkörper eine Shore-A-Härte größer als 85, vorzugsweise größer oder gleich 90 auf. Demgegenüber hat das elastomere Material im übrigen Teil des Dichtungsprofils eine geringere Shore-A-Härte, beispielsweise zwischen 60 und 70.

In vorteilhafter Ausgestaltung kann der Grundkörper mindestens eine Dichtlippe aufweisen, die über einen Verbindungssteg an dem äußeren und/oder inneren Schenkel angeordnet ist und die sich schräg nach innen in einen vom Grundkörper gebildeten Hohlraum erstreckt. Bei einer derartigen Ausbildung der Dichtlippe ist ein Aufsetzen des Dichtungsprofils auf einen Türflansch sehr leicht möglich, da dann die Dichtlippe wegen des sehr schmalen Verbindungsstegs zum Grundkörper leicht nach innen klappt. Beim Herausziehen verkeilt sich die Dichtlippe aber selbsttätig und sehr leicht gegen den Türflansch, so daß damit dem Herausziehen ein erheblicher Widerstand entgegengesetzt wird.

Vorteilhaft ist die Dichtlippe mit im wesentlichen dreieckigem Querschnitt ausgebildet, wobei die Kopffläche eine konkav gewölbte Einziehung aufweist. Dadurch wird ein Verkeilen der Dichtlippe beim Herausziehen des Dichtungsprofils zusätzlich erhöht.

Die Dichtlippe kann vorteilhaft aus dem gleichen elastomeren Material wie der Grundkörper bestehen.

In vorteilhafter Ausgestaltung der Erfindung ist das freie Ende des inneren Schenkels als Rastwulst ausgebildet. Ein solcher Rastwulst dient dem Zweck, das Verhältnis zwischen Aufsteckkraft und Abzugskraft beim Dichtungsprofil weiter zu verbessern. Da der Rastwulst wie der übrige innere Schenkel des Grundkörpers aus elastomerem Material besteht, stellt er beim Aufstecken des Dichtungsprofils auf einen Türflansch keinerlei Hindernis dar. Nach Beendigung des Aufsteckvorgangs hintergreift der Rastwulst das freie Ende des Türflanschs. Ein Abziehen des Dichtungsprofils vom Türflansch ist nunmehr nur noch unter großen Anstrengungen möglich. Dieser Widerstand gegen ein Abziehen wird insbesondere auch noch durch die Verwendung einer harten Elastomermischung im Rastwulst sowie der Vorspannung im inneren Schenkel des Grundkörpers verstärkt.

In weiterer Ausgestaltung der Erfindung weist der Dichtungsbereich des Dichtungsprofils eine schräg abragende Dichtlippe auf. Vorteilhaft ist die Dichtlippe relativ lang, um eine gute Dichtwirkung gegen Feuchtigkeit zu erreichen. Die Dichtlippe kann in ihrem an der Scheibe anliegenden Bereich zusätzlich eine Beflockung aufweisen. Anstelle einer Beflockung können auch andere Beschichtungen, wie beispielsweise Gleitlacke und Pulverbeschichtungen, insbesondere PA-Pulverbeschichtungen, verwendet werden.

Das erfindungsgemäße Dichtungsprofil kann auf einfache und kostengünstige Weise als Koextrudat hergestellt werden. Weiterhin ist eine einfache Anpassung des Dichtungsprofils etwa durch Wegschneiden einzelner Profilteile möglich, ohne daß eventuell freiliegende Bereiche des Verstärkungselements in einem nachträglichen Arbeitsschritt erneut vulkanisiert werden müßten. Lediglich die Profilenden sind bei Bedarf durch Vulkanisation oder andere geeignete Prozeßarten zu versiegeln.

Die Erfindung wird nun anhand von Ausführungsbeispielen, die in der Zeichnung schematisch dargestellt sind, näher beschrieben. Es zeigen:
- Figur 1: eine Seitenansicht des Fensterbereichs eines Kraftfahrzeugs;
- Figur 2: einen Querschnitt durch das erfindungsgemäße Dichtungsprofil gemäß einer ersten Ausführungsform der Erfindung;
- Figur 3: eine Querschnittsansicht des erfindungsgemäßen Dichtungsprofils gemäß einer weiteren Ausführungsform;
- Figur 4: einen Querschnitt durch das Dichtungsprofil entsprechend der Schnittlinie IV-IV nach Figur 1;
- Figur 5: einen Querschnitt durch das Dichtungsprofil entsprechend der Schnittlinie V-V nach Figur 1; und
- Figur 6: einen Querschnitt durch das erfindungsgemäße Dichtungsprofil gemäß einer weiteren Ausführungsform.

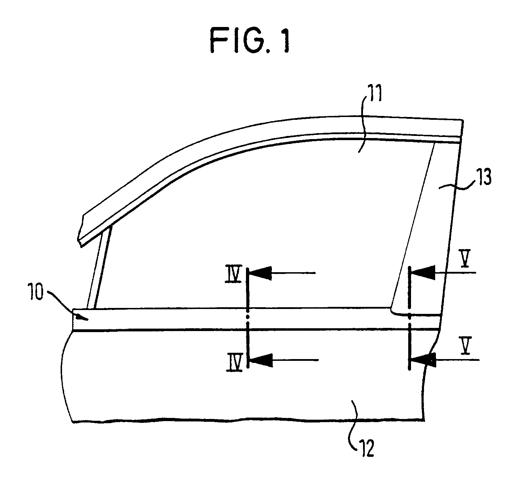

Wie man aus Figur 1 ersieht, ist ein Dichtungsprofil 10 aus elastomerem Material zum Abdichten des Fensterschachts für eine Scheibe 11 an der Tür 12 eines Kraftfahrzeugs angebracht. Das Dichtungsprofil 10 erstreckt sich über die gesamte Länge der Fahrzeugtür 12 bis über eine Blende 13, die im Bereich der B-Säule des nicht dargestellten Kraftfahrzeugs angeordnet ist.

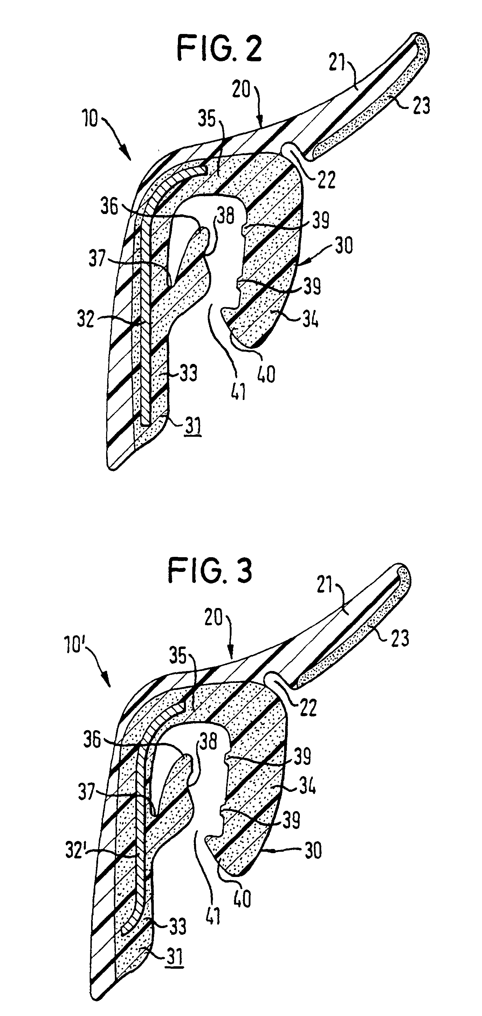

Gemäß Figur 2 besteht das Dichtungsprofil 10 aus einem Dichtungsbereich 20 und einem Befestigungsbereich 30, die jeweils aus elastomerem Material gebildet sind. Der Dichtungsbereich 20 weist eine schräg nach oben abragende Dichtlippe 21 auf, die zum Abdichten gegen eine Fensterscheibe dient. Derjenige Bereich der Dichtlippe 21, der an der Fensterscheibe anliegt, ist zusätzlich mit einer Beflockung 23 beschichtet. Die Beflockung dient dem Zweck, den Widerstand der Dichtlippe 21 beim Anheben und Absenken des Fensters zu verringern. Es ist jedoch auch denkbar, anstelle einer Beflockung andere Beschichtungen wie Gleitlacke oder Pulverbeschichtungen zu verwenden. Weiterhin ist in dem der Profilbasis zugewandten Endbereich der Dichtlippe 21 eine Aussparung 22 vorgesehen, die ein leichtes Abklappen der Dichtlippe 21 ermöglicht.

Der Dichtungsbereich 20 ist mit dem Befestigungsbereich 30 verbunden. Der Befestigungsbereich 30 weist einen im wesentlichen U-förmigen Grundkörper 31 auf, der wiederum aus einem äußeren Schenkel 33, einem inneren Schenkel 34 sowie einem Stegelement 35 besteht, wobei das Stegelement 35 die beiden Schenkel 33 und 34 miteinander verbindet. Der U-förmige Grundkörper 31 umgibt einen Hohlraum 41.

Weiterhin ist im Grundkörper 31 ein Verstärkungselement 32 ausgebildet. Das Verstärkungselement 32 ist gemäß Figur 2 L-förmig ausgebildet und erstreckt sich im äußeren Schenkel 33 sowie in einem sich daran anschließenden Teilbereich des Stegelements 35. Weiterhin ist an der Innenseite des äußeren Schenkels 33 eine Dichtlippe 36 angeordnet, die sich schräg in den Hohlraum 41 hinein erstreckt. Die Dichtlippe 36 ist angenähert dreieckförmig ausgebildet und über einen schmalen Verbindungssteg 37 an dem äußeren Schenkel 33 angelegt. Die Dichtlippe 36 ist an ihrem verbreiterten Kopfbereich mit einer konkav gewölbten Einziehung 38 versehen. Insgesamt verläuft diese Kopffläche im unbelasteten Zustand schräg im Winkel zu einer gedachten Mittelebene des U-förmigen Grundkörpers 31.

Gegenüber der Dichtlippe 36 sind an der in den Hohlraum 41 gerichteten Oberfläche des inneren Schenkels 34 zwei kleine wulstförmige Dichtlippen 39 vorgesehen. Der Endbereich des inneren Schenkels 34 ist in Form einer Rastwulst 40 ausgebildet. Die Rastwulst 40 weist eine Rastnase auf, die sich in den Hohlraum 41 hinein erstreckt. Das elastomere Material des Grundkörpers 31 besteht aus einer Mischung, die härter ist als die Mischung des übrigen Dichtungsprofils 10. Während das Dichtungsprofil 10 beispielsweise im Dichtungsbereich 20 eine Shore-A-Härte von etwa 60 bis 70 hat, weist das elastomere Material im Grundkörper 31 eine Shore-A-Härte größer als 85 auf. Im Ausführungsbeispiel gemäß Figur 2 ist die Shore-A-Härte des Materials im Grundkörper 31 sogar größer oder gleich 90.

Der Dichtungsbereich 20 und der Befestigungsbereich 30 sind im Bereich des Stegelements 35 und des äußeren Schenkels 33 miteinander verbunden.

Das in Figur 3 dargestellte Dichtungsprofil 10' ist im wesentlichen wie das Dichtungsprofil gemäß Figur 2 aufgebaut, wobei gleiche und funktionsgleiche Elemente mit identischen Bezugsziffern versehen sind. Im Unterschied zum Ausführungsbeispiel gemäß Figur 2 weist das Dichtungsprofil 10' nach Figur 3 ein Verstärkungselement 32' auf, das S-förmig ausgebildet ist. Durch die S-Form des Verstärkungselements 32' wird die Steifigkeit des gesamten Dichtungsprofils 10' zusätzlich erhöht.

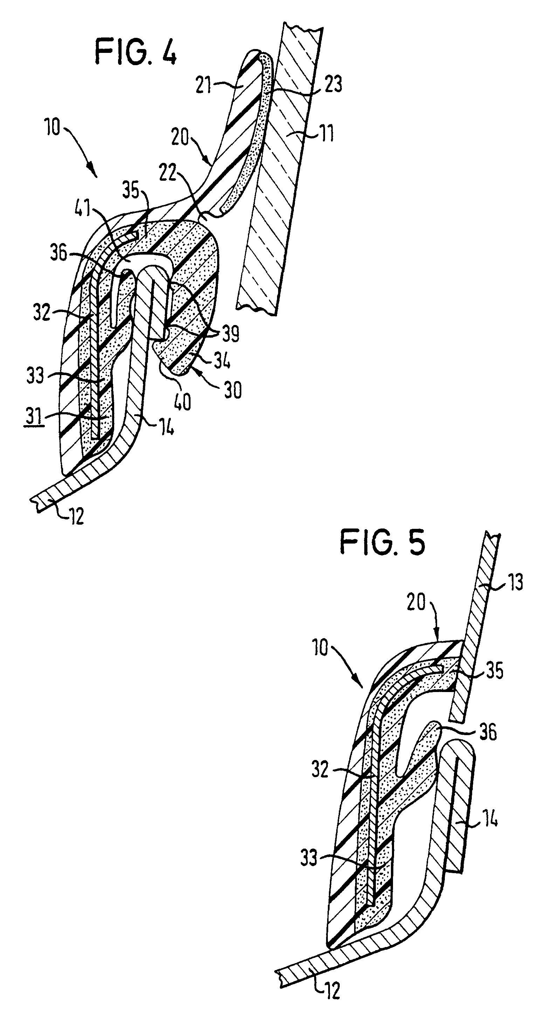

Das Aufschieben des Dichtungsprofils 10 auf den Türflansch 14 einer Fahrzeugtür 12 sowie die Anpassung des Dichtungsprofils im Bereich der Blende 13 wird nun anhand der Figuren 4 und 5 beschrieben.

Wie aus Figur 4 ersichtlich ist, wird das Dichtungsprofil 10 derart auf den Türflansch 14 aufgesteckt, daß der freie Endbereich des Türflanschs 14 von dem Hohlraum 41 des Grundkörpers 31 aufgenommen wird. Auf diese Weise befindet sich der Türflansch 14 zwischen dem äußeren Schenkel 33 und dem inneren Schenkel 34 des Grundkörpers 31, während der Türflansch 14 im Endbereich vom Stegelement 35 abgedeckt ist.

Das Aufstecken des Dichtungsprofils 10 auf den Türflansch 14 erfolgt in einfacher Weise, da der Grundkörper 31 aus elastomerem und damit dehnbarem Material besteht. Der innere Schenkel 34 weist eine Vorspannung auf, so daß er im unbelasteten Zustand nach innen in Richtung des äußeren Schenkels geneigt ist. Beim Aufstecken auf den Türflansch 14 wird der innere Schenkel 34 nach außen gedrückt. Nach Beendigung des Aufsteckvorgangs sitzt das Dichtungsprofil 10 fest auf dem Türflansch 14 auf. Ein erneutes Abziehen des Dichtungsprofils 10 ist aus verschiedenen Gründen nur noch schwer möglich. Zum einen führt das Verstärkungselement 32 zu einer Versteifung des Dichtungsprofils 10 im Bereich des äußeren Schenkels 33, so daß der Grundkörper 31 relativ formstabil ausgestaltet ist. Diese Formstabilität wird durch die Verwendung einer harten Mischung mit einer Shore-A-Härte von größer oder gleich 90 im Bereich des Grundkörpers 31 erhöht. Zusätzlich legt sich die an der Innenseite des äußeren Schenkels 33 angeordnete Dichtlippe 36 mit ihrem verbreiterten Kopfbereich eng gegen den Türflansch 14 an. Auf gleiche Weise drücken die wulstförmigen kleinen Dichtlippen 39 des inneren Schenkels 34 von der anderen Seite gegen den Türflansch 14. Die Andrückkraft der Dichtlippen 39 wird durch den Umstand verstärkt, daß der innere Schenkel 34 mit einer Vorspannung versehen ist. Schließlich verhindert auch der am freien Ende des inneren Schenkels 34 ausgebildete Rastwulst 40 ein einfaches Abziehen des Dichtungselements 10 vom Türflansch 14. Der Rastfuß 40 hintergreift nämlich mit seiner in den Hohlraum 41 gerichteten Rastnase das freie Ende des Türflanschs 14. Auf Grund der Vorspannung im inneren Schenkel 34 sowie der Tatsache , daß auch der Rastwulst aus einem Material harter Mischung besteht, hat der Rastwulst 40 die Funktion eines Hakens und der gesamte innere Schenkel 34 die Wirkung eines Schnappverschlusses. Das Abziehen des Dichtungsprofils 10 ist nur noch unter Aufbringung großer Kräfte möglich. Die vom Dichtungsbereich 20 des Dichtungsprofils 10 schräg nach oen abragende Dichtlippe 21 wird nach erfolgtem Aufsetzen des Dichtungsprofils 10 auf dem Türflansch 14 nach oben geklappt, so daß sie mit ihrer Innenseite eng gegen die Fensterscheibe 11 anliegt. Dadurch wird eine gute Abdichtung gegenüber Feuchtigkeit, Schmutz und dergleichen gewährleistet. Das Verschwenken der Dichtlippe 21 wird durch die Verwendung der Aussparung 22 weiter vereinfacht. Um ein möglichst reibungsfreies Auf- und Abgleiten des Fensters 11 zu ermöglichen, ist die Dichtlippe 21 an ihrer dem Fenster 11 zugewandten Seite zusätzlich mit einer Beflockung 23 versehen.

Wie sich aus Figur 5 ergibt, müssen beim Dichtungsprofil 10 im Bereich der Blende 13 Teile des Dichtungsprofils 10 weggeschnitten werden, um ein enges und kontinuierliches Anliegen des Dichtungsprofils 10 über die gesamte Länge der Fahrzeugtür 12 sicherzustellen. Gemäß Figur 5 muß im Bereich der Blende 13 sowohl die Dichtlippe 21 als auch der gesamte äußeren Schenkel 34 des Grundkörpers 31 weggeschnitten werden. Das Dichtungsprofil 10 liegt somit nur noch über den äußeren Schenkel 33, der vom äußeren Schenkel 33 abragenden Dichtlippe 36 sowie einem Teilbereich des Stegelements 35 an dem Türflansch 14 bzw. der Blende 13 an. Da das Verstärkungselement 32 nur im äußeren Schenkel 33 sowie einem sich daran anschließenden Teilbereich des Stegelements 35 ausgebildet ist, ist es beim Schneiden des Dichtungsprofils 10 nicht notwendig, auch das Verstärkungselement 32 zu durchschneiden. Damit entfällt der zusätzliche Bearbeitungsschritt des nachträglichen Vulkanisierens des freiliegenden Endes von dem Verstärkungselement 32. Durch die geeignete Auswahl der Länge des Verstärkungselments 32 im Stegelement 35 kann sichergestellt werden, daß immer ein ausreichend großer Bereich aus elastomerem Material zwischen dem Ende des Verstärkungselements und der an der Blende 13 anliegenden Schnittkante bestehen bleibt. Dies gewährleistet eine glatte, einheitliche Oberfläche im Schnittkantenbereich des Dichtungsprofils 10, wodurch eine gleichmäßige Dichtwirkung erzielt wird.

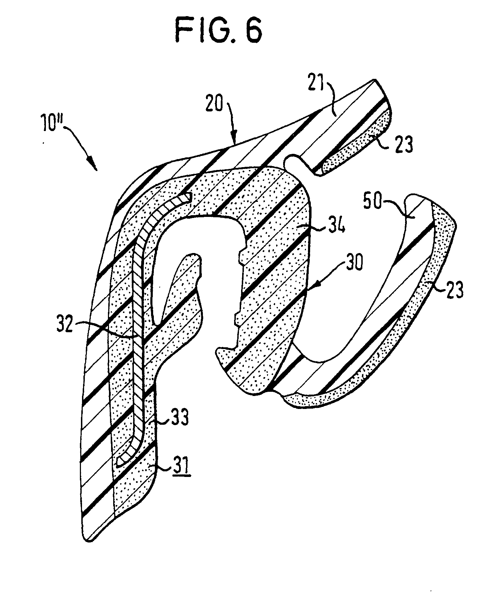

Das in Figur 6 dargestellte Dichtungsprofil 10" entspricht in seinem grundsätzlichen Aufbau dem Dichtungsprofil 10' aus Figur 3. Im Unterschied zum Dichtungsprofil 10' weist das Dichtungsprofil 10" eine zusätzliche Dichtlippe 50 auf, die am inneren Schenkel 34 des Grundkörpers 31 angeordnet ist. Ähnlich wie die Dichtlippe 21 dient die Dichtlippe 50 zum Abdichten gegen eine Fensterscheibe. Zur Verringerung des Widerstands der Dichtlippe 50 beim Anheben und Absenken des Fensters ist die Dichtlippe 50 zusätzlich mit einer Beflockung 23 beschichtet. Auch hier ist es wiederum denkbar, anstelle der Beflockung andere Beschichtungen wie beispielsweise Gleitlacke oder Pulverbeschichtungen zu verwenden.

Bei dem in Figur 6 dargestellten Dichtungsprofil 10" ist die Dichtlippe 21 im Vergleich zum Dichtungsprofil 10' aus Figur 3 verkürzt ausgebildet. Die Länge der Dichtlippe 21 und der Dichtlippe 50 kann, auf den jeweiligen Anwendungsfall bezogen, unterschiedlich lang ausgebildet sein. Bei dem Dichtungsprofil 10" ist eine verkürzte Dichtlippe 21 ausreichend, da die zusätzlich vorhandene Dichtlippe 50 einen Anteil der Dichtwirkung des Dichtungsprofils 10" übernimmt.

## Patentansprüche

1. Dichtungsprofil aus elastomerem Material, insbesondere zum Abdichten von Fensterschächten für Seitenscheiben in Türen von Kraftfahrzeugen, mit einem Dichtungsbereich (20) und einem mit diesem verbundenen Befestigungsbereich (30), wobei der Befestigungsbereich (30) einen im Querschnitt U-förmigen Grundkörper (31) mit einem äußeren Schenkel (33), einem inneren Schenkel (34) und einem Stegelement (35) sowie ein Verstärkungselement (32; 32') in dem äußeren Schenkel (33) aufweist, **dadurch gekennzeichnet, daß** das Verstärkungselement (32; 32') sich derart in dem äußeren Schenkel (33) und in wenigstens einem sich daran anschließenden Teilbereich des Stegelements (35) erstreckt, daß Teile (21, 34) des Dichtungsprofils (10; 10'; 10"), insbesondere im Bereich einer Blende (13), zur Anpassung weggeschnitten werden können, ohne daß beim Wegschneiden das Verstärkungselement (32; 32') mitgeschnitten werden muß.

2. Dichtungsprofil nach Anspruch 1, **dadurch gekennzeichnet, daß** das Verstärkungselement (32; 32') L-förmig oder S-förmig ausgebildet ist.

3. Dichtungsprofil nach Anspruch 1 oder 2, **dadurch gekennzeichnet, daß** das Verstärkungselement (32; 32') aus Metall, vorzugsweise aus Stahl oder Aluminium besteht.

4. Dichtungsprofil nach einem der Ansprüche 1 bis 3, **dadurch gekennzeichnet, daß** der innere Schenkel (34) mit einer Vorspannung beaufschlagt ist.

5. Dichtungsprofil nach einem der Ansprüche 1 bis 4, **dadurch gekennzeichnet, daß** das elastomere Material im Grundkörper (31) eine größere Shore-A-Härte aufweist als das elastomere Material im übrigen Dichtungsprofil (10; 10'; 10").

6. Dichtungsprofil nach Anspruch 5, **dadurch gekennzeichnet, daß** das elastomere Material im Grundkörper (31) eine Shore-A-Härte größer als 85, vorzugsweise größer oder gleich 90 aufweist.

7. Dichtungsprofil nach einem der Ansprüche 1 bis 6, **dadurch gekennzeichnet, daß** der Grundkörper (31) mindestens eine Dichtlippe (36) aufweist, die über einen Verbindungssteg (37) an dem äußeren und/oder inneren Schenkel (33, 34) angeordnet ist und die sich schräg nach innen in einen vom Grundkörper (31) gebildeten Hohlraum (41) erstreckt.

8. Dichtungsprofil nach Anspruch 7, **dadurch gekennzeichnet, daß** die Dichtlippe (36) mit einem im wesentlichen dreieckigen Querschnitt ausgebildet ist, wobei die Kopffläche eine konkav gewölbte Einziehung (38) aufweist.

9. Dichtungsprofil nach einem der Ansprüche 1 bis 8, **dadurch gekennzeichnet, daß** das freie Ende des inneren Schenkels (34) als Rastwulst (40) ausgebildet ist.

## Claims

1. An elastomeric weatherseal, more particularly for sealing side window door cavities in motor vehicle doors including a sealing portion (20) and, connected thereto, a fastening portion (30) comprising a cross-sectionally U-shaped base body (31) having an outer leg (33), an inner leg (34) and a web element (35) as well as a reinforcing element (32; 32') in the outer leg (33), **characterized in that** said reinforcing element (32; 32') is configured thus in said outer leg (33) and in at least an adjoining portion of said web element (35) that parts (21, 34) of said weatherseal (10; 10'; 10") may be trimmed for adaptation purposes, especially in the region of a finisher (13), without the need of including trimming of the reinforcing element (32; 32') during trimming.

2. The weatherseal as set forth in claim 1, **characterized in that** said reinforcing element (32; 32') is configured L-shaped or S-shaped.

3. The weatherseal as set forth in claim 1 or 2, **characterized in that** said reinforcing element (32; 32') is made of metal, preferably of steel or aluminium.

4. The weatherseal as set forth in any of the claims 1 to 3, **characterized in that** said inner leg (34) is pretensioned.

5. The weatherseal as set forth in any of the claims 1 to 4, **characterized in that** the elastomeric material in said base body (31) exhibits a higher Shore A hardness than the elastomeric material in the remainder of said weatherseal (10; 10'; 10").

6. The weatherseal as set forth in claim 5, **characterized in that** the elastomeric material in said base body (31) has a Shore A hardness exceeding 85, preferably greater than or equal to 90.

7. The weatherseal as set forth in any of the claims 1 to 6, **characterized in that** said base body (31) comprises at least one sealing lip (36) arranged over a connecting web (37) at said outer and/or inner leg (33, 34) and which extends inclined inwards into a cavity (41) formed by said base body (31).

8. The weatherseal as set forth in claim 7, **characterized in that** said sealing lip (36) is configured with a substantially delta-shaped cross-section, its head surface area featuring a concave curved recess (38).

9. The weatherseal as set forth in any of the claims 1 to 8, **characterized in that** the free end of said inner leg (34) is configured as a latching bead (40).

## Revendications

1. Profilé d'étanchéité en matériau élastomère, en particulier pour étancher des puits de fenêtre destinés aux vitres dans des portes de véhicules automobiles, comportant une zone d'étanchement (20) et une zone de fixation (30) reliée à celle-ci, la zone de fixation (30) comprenant un corps de base (31) de section transversale en forme de U avec une branche extérieure (33), une branche intérieure (34) et un élément formant âme (35) ainsi qu'un élément de renforcement (32 ; 32') dans la branche extérieure (33), **caractérisé en ce que** l'élément de renforcement (32 ; 32') s'étend dans la branche extérieure (33) et au moins dans une zone partielle, se raccordant à celle-ci, de l'élément formant âme (35) de telle sorte que des parties (21, 34) du profilé d'étanchéité (10 ; 10' ; 10"), en particulier dans la zone d'un obturateur (13), peuvent être coupées pour les adapter sans devoir couper également l'élément de renforcement (32 ; 32') lors de la coupe.

2. Profilé d'étanchéité selon la revendication 1, **caractérisé en ce que** l'élément de renforcement (32 ; 32') est réalisé en forme de L ou en forme de S.

3. Profilé d'étanchéité selon l'une ou l'autre des revendications 1 et 2, **caractérisé en ce que** l'élément de renforcement (32 ; 32') est constitué en métal, de préférence en acier ou en aluminium.

4. Profilé d'étanchéité selon l'une des revendications 1 à 3, **caractérisé en ce que** la branche intérieure (34) est sollicitée par une précontrainte.

5. Profilé d'étanchéité selon l'une des revendications 1 à 4, **caractérisé en ce que** le matériau élastomère dans le corps de base (31) présente une dureté Shore A supérieure à celle du matériau élastomère dans le reste du profilé d'étanchéité (10 ; 10' ; 10").

6. Profilé d'étanchéité selon la revendication 5, **caractérisé en ce que** le matériau élastomère dans le corps de base (31) présente une dureté Shore A supérieure à 85, de préférence supérieure ou égale à 90.

7. Profilé d'étanchéité selon l'une des revendications 1 à 6, **caractérisé en ce que** le corps de base (31) comprend au moins une lèvre d'étanchéité (36) qui est agencée sur la branche extérieure et/ou intérieure (33, 34) via une barrette de liaison (37) et qui s'étend en oblique vers l'intérieur jusque dans une cavité (41) formée par le corps de base (31).

8. Profilé d'étanchéité selon la revendication 7, **caractérisé en ce que** la lèvre d'étanchéité (36) est réalisée avec une section transversale sensiblement triangulaire, la surface de tête présentant un retrait bombé concave (38).

9. Profilé d'étanchéité selon l'une des revendications 1 à 8, **caractérisé en ce que** l'extrémité libre de la branche intérieure (34) est réalisée sous forme de bourrelet d'enclenchement (40).
